# EUROPÄISCHE PATENTANMELDUNG

(11) **EP 1 571 686 A2**
(43) Veröffentlichungstag der Anmeldung: **07.09.2005**
(21) Anmeldenummer: 05090024.0
(22) Anmeldetag: 09.02.2005
(51) Int. Cl.: H01H 71/04, H02H 3/04

(54) **Niederspannungs-Leistungsschalter mit elektronischem Überstromauslöser und einer Betriebszustands-Erkennungseinrichtung**

(30) Priorität: 04.03.2004 DE 102004011025
(71) Anmelder: SIEMENS AKTIENGESELLSCHAFT, 80333 München (DE)
(72) Erfinder: Pancke, Andreas, 13507 Berlin (DE); Röhl, Wolfgang, 13503 Berlin (DE); Shiller, Manfred, 14169 Berlin (DE)

(57) **Zusammenfassung**

Die Erfindung betrifft einen Niederspannungs-Leistungsschalter (1) mit elektronischem Überstromauslöser, der seine Betriebsenergie aus dem von dem Niederspannungs-Leistungsschalter (1) überwachten Netz (2) bezieht, und einer Betriebszustands-Erkennungseinrichtung. Da es vorkommen kann, dass der Leistungsschalter (1) beim Einschalten auf einen Kurzschluss schaltet, kann es angebracht sein, dass unmittelbar nach dem Einschalten keine unverzögerte Auslösung des Leistungsschalters (1) zugelassen oder die Auslösezeit für die verzögerte Auslösung verändert wird.

Vorgesehen ist, dass die Betriebszustands-Erkennungseinrichtung eine Einrichtung zum Erkennen eines Einschaltvorgangs ist, deren Ausgangssignal an den bei Beginn eines Einschaltvorgangs für eine vorbestimmte Zeitdauer eine veränderte Ausschaltzeit des Niederspannungs-Leistungsschalters (1) einstellenden Überstromauslöser geführt ist.

## Beschreibung

Die Erfindung betrifft einen Niederspannungs-Leistungsschalter mit elektronischem Überstromauslöser, der seine Betriebsenergie aus dem von dem Niederspannungs-Leistungsschalter überwachten Netz bezieht, und einer Betriebszustands-Erkennungseinrichtung.

Elektronische Überstromauslöser dienen zur Überwachung des Stromes in einem ein- oder mehrphasigen Netz hinsichtlich des Auftretens von Überströmen und Kurzschlussströmen. Je nach der Höhe eines unzulässig hohen, über Stromwandler gemessenen Stromes bewirkt der Überstromauslöser eine verzögerte oder unverzögerte Auslösung des Niederspannungs-Leistungsschalters.

Da es vorkommen kann, dass der Leistungsschalter beim Einschalten auf einen Kurzschluss schaltet, kann es angebracht sein, dass unmittelbar nach dem Einschalten keine unverzögerte Auslösung des Leistungsschalters zugelassen oder die Auslösezeit für die verzögerte Auslösung verändert wird. Der Strom fließt in einem solchen Fall nämlich bereits in einem Lichtbogen kurz bevor die Hauptstromkontakte sich berühren und der Schaltvorgang abgeschlossen ist. Außerdem hat der Federantrieb nach Berühren der Hauptsromkontakte noch einen gewissen Nachlauf. Ein Umsteuern mit einer Umkehr der Schaltrichtung würde in einem solchen Augenblick eine unzulässig hohe Belastung für die mechanischen Teile des Leistungsschalters bedeuten. Hierfür muss der elektronische Auslöser den aktuellen Schaltzustand des Leistungsschalters erfassen, da er im stromlosen Zustand den vorher erfolgten Ausschaltvorgang nicht zu speichern vermag, seinen aktuellen Betriebszustand also nicht kennt.

Es sind bereits Niederspannungs-Leistungsschalter bekannt, bei denen der aktuelle Betriebszustand des Leistungsschalters aus anderen Gründen erfasst und für den Betreiber der elektrischen Anlage angezeigt wird. So ist aus der DE 100 44 058 C1 ein elektrischer Schalter mit einem elektronischen Auslöserblock bekannt, bei dem die von der Schaltstellung der Arbeitskontakte des Schalters abhängige Stellung einer Sperrstange ein mechanisches Sperren des Auslöserblocks bewirkt, so dass dieser bei geschlossener Schalterstellung nicht vom Schalter abnehmbar ist. Gleichzeitig wird die Stellung der Sperrstange optisch über ein Fenster in der Frontwand des Schalters angezeigt.

Aus der EP 0 905 846 A2 ist außerdem eine elektronische Überstromauslöseeinrichtung bekannt, die mit einer Datenanzeige ausgerüstet ist, auf der der Einschaltzustand sowie bei einem Überstrom die verbleibende Zeit bis zu einer Schalterauslösung angezeigt werden. Der Betreiber der Anlage kann so bei einer verzögerten Auslösung infolge Überlast geeignete Maßnahmen einleiten. Soll auch der Ausschaltzustand, zum Beispiel infolge Kurzschluss, angezeigt werden, ist der Überstromauslöser jedoch mit einem eigenen Energielieferanten auszurüsten, da im ausgeschalteten Zustand des Leistungsschalters aus dem Netz keine Energie nachgeliefert wird.

Der Erfindung liegt die Aufgabe zugrunde, einen Niederspannungs-Leistungsschalter anzugeben, bei dem ein Einschalten erkannt wird, um kurzzeitig die Auslösezeit beeinflussen zu können.

Erfindungsgemäß wird die Aufgabe gelöst durch die Merkmale des Anspruchs 1. Zweckmäßige Ausgestaltungen sind Gegenstand der Unteransprüche.

Danach ist die Betriebszustands-Erkennungseinrichtung eine Einrichtung zum Erkennen eines Einschaltvorgangs, deren Ausgangssignal an den bei Beginn eines Einschaltvorgangs für eine vorbestimmte Zeitdauer eine veränderte Ausschaltzeit des Niederspannungs-Leistungsschalters einstellenden Überstromauslöser geführt ist.

Beispielsweise kann für einen Zeitraum von etwa 100 ms eine Mindest-Auslösezeit eingestellt werden.

In bevorzugter Ausgestaltung der Erfindung ist vorgesehen, dass die Einrichtung zum Erkennen eines Einschaltvorganges ein mit den Hauptstromkontakten des Niederspannungs-Leistungsschalters mechanisch verbundener Wischkontaktschalter ist, der mit einem eigenen Energiespeicher verbunden ist.

In ebenfalls bevorzugter Ausgestaltung der Erfindung kann auch vorgesehen sein, dass die Einrichtung zum Erkennen eines Einschaltvorganges ein in, an oder in unmittelbarer Nähe des Niederspannungs-Leistungsschalters angebrachter Erschütterungssensor ist, der ebenfalls einen eigenen Energiespeicher aufweist.

In weiterer bevorzugter Ausgestaltung der Erfindung kann auch vorgesehen sein, dass die Einrichtung zum Erkennen eines Einschaltvorganges ein mit dem Schaltgetriebe des Niederspannungs-Leistungsschalters zusammenwirkender Piezosensor ist.

Die Erfindung soll nachstehend anhand eines Ausführungsbeispiels näher erläutert werden. In den Zeichnungen zeigen:
- Figur 1: das Prinzipschaltbild eines elektronischen Überstromauslösers mit der Erfassung eines Einschaltvorganges über einen Wischkontaktschalter und
- Figur 2: mit der Erfassung des Einschaltvorganges durch einen Piezosensor.

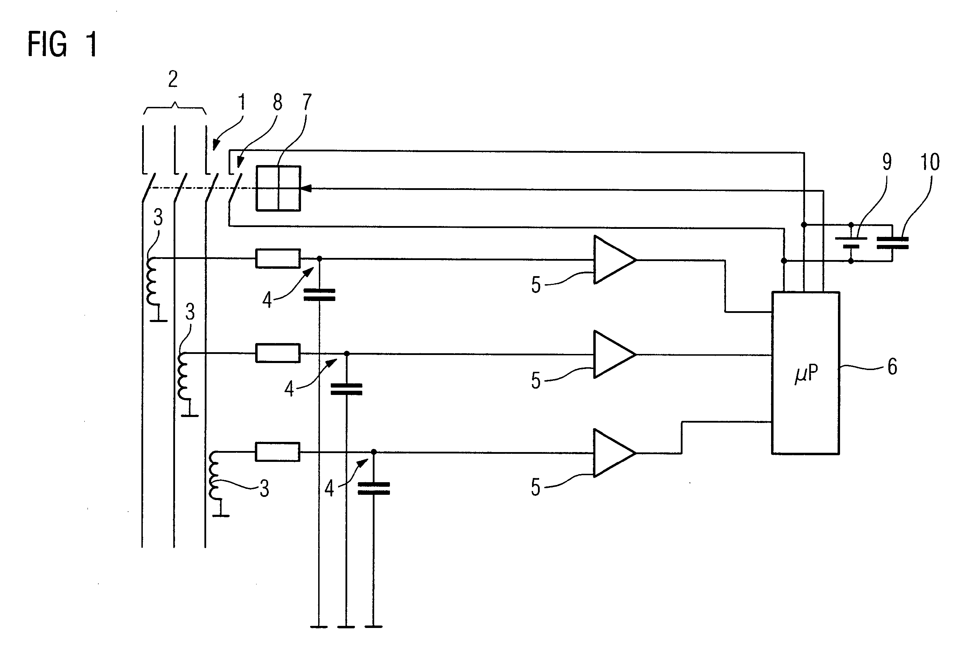

Figur 1 zeigt in einem Prinzipschaltbild einen elektronischen Überstromauslöser für einen Niederspannungs-Leistungsschalter 1, mit dem ein Netz 2 auf Überströme hin überwacht wird. Als Stromwandler zur Erfassung der Netzströme dienen Rogowskispulen 3. Die Ausgänge der Rogowskispulen 3 sind über eine Tiefpass-RC-Beschaltung 4 an die Eingänge von Messverstärkern 5 geschaltet, deren Ausgänge an einen Mikroprozessor 6 geführt sind. Der Mikroprozessor 6 überwacht die Stromsignale auf unzulässig hohe Ströme im Netz 2 und legt für den Fall einer Überlast die Ausschaltverzögerung fest. Ein etwaiger Ausschaltbefehl gelangt an einen Auslösemagneten 7 des Niederspannungs-Leistungsschalters 1, der dessen Öffnen einleitet.

Zum Erkennen eines Einschaltvorganges des Niederspannungs-Leistungsschalters 1 sind dessen Kontakte mit einem Wischkontaktschalter 8 verbunden. Das Meldesignal des Wischkontaktschalters 8 ist auf einen Eingang des Mikroprozessors 6 geführt. Meldet der Wischkontaktschalter 8 einen Schließvorgang des Niederspannungs-Leistungsschalters 1, so wird im Mikroprozessor 6 für einen voreingestellten Zeitraum eine Mindest-Auslösezeit eingestellt. Der Wischkontaktschalter 8 ist hierzu mit einem eigenen Energiespeicher in Form einer Batterie 9 verbunden, die mit einem Kondensator 10 beschaltet ist. Die Einstellung der Mindest-Auslösezeit wird nach Ablauf des vorgenannten Zeitraums wieder aufgehoben.

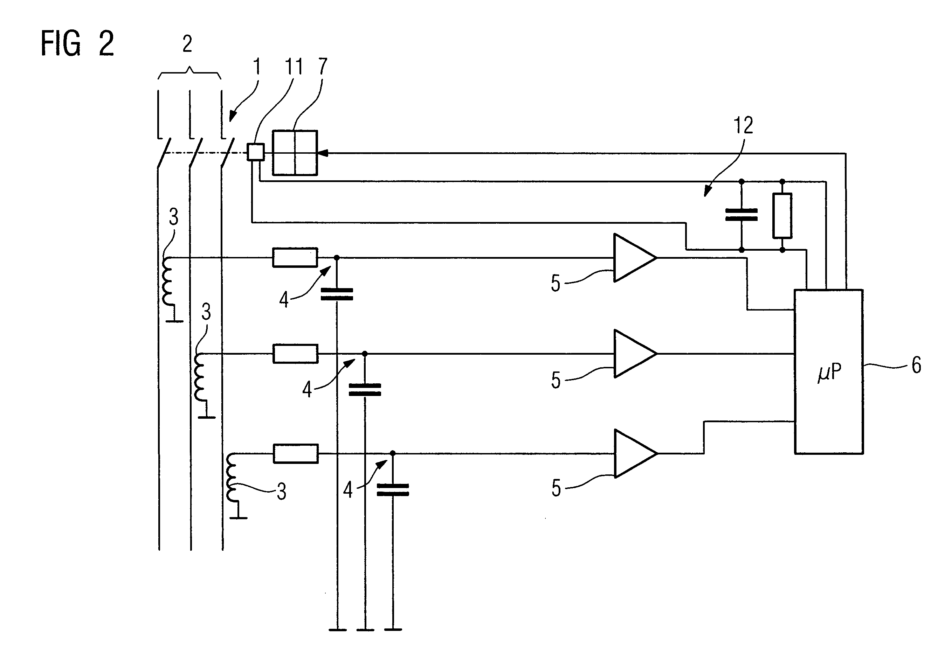

Ein Nachteil der Schaltung nach Figur 1 ist der zusätzliche Aufwand für den Wischkontaktschalter 8, die Zuleitung, Steckkontakte und die fehlende Möglichkeit, bestehende Schalter durch Einbau eines derart erweiterten Auslösers aufzurüsten. Dieser Nachteil wird vermieden, wenn der elektronische Auslöser direkt einen Sensor zur Erkennung des Schaltzustandes des Leistungsschalters 1 erhält. Der Sensor kann beispielsweise ein Erschütterungssensor sein oder, wie in Figur 2 angedeutet ist, ein Piezosensor 11, der den Vorteil hat, dass er keinen eigenen Energiespeicher 9 benötigt. Der Piezosensor 11 meldet das Einschalten des Niederspannungs-Leistungsschalters 1 an den Mikroprozessor 6 bereits, bevor dessen Hauptstromkontakte geschlossen sind.

Der Piezosensor 11 ist mechanisch mit dem Schaltgetriebe des Niederspannungs-Leistungsschalters 1 verbunden ist und gibt beim Einschalten des Niederspannungs-Leistungsschalters 1 einen Spannungsimpuls ab, der zweckmäßig in einem Kondensator 12 zwischengespeichert wird.

## Patentansprüche

1. Niederspannungs-Leistungsschalter mit elektronischem Überstromauslöser, der seine Betriebsenergie aus dem von dem Niederspannungs-Leistungsschalter überwachten Netz bezieht, und einer Betriebszustands-Erkennungseinrichtung,
**dadurch gekennzeichnet,**
**dass** die Betriebszustands-Erkennungseinrichtung eine Einrichtung zum Erkennen eines Einschaltvorgangs ist, deren Ausgangssignal an den bei Beginn eines Einschaltvorgangs für eine vorbestimmte Zeitdauer eine veränderte Ausschaltzeit des Niederspannungs-Leistungsschalters (1) einstellenden Überstromauslöser geführt ist.

2. Niederspannungs-Leistungsschalter nach Anspruch 1,
**dadurch gekennzeichnet,**
**dass** die Einrichtung zum Erkennen eines Einschaltvorganges ein mit den Hauptstromkontakten des Niederspannungs-Leistungsschalters (1) mechanisch verbundener Wischkontaktschalter (8) ist, der mit einem eigenen Energiespeicher (9) verbunden ist.

3. Niederspannungs-Leistungsschalter nach Anspruch 1,
**dadurch gekennzeichnet,**
**dass** die Einrichtung zum Erkennen eines Einschaltvorganges ein in, an oder in unmittelbarer Nähe des Niederspannungs-Leistungsschalters (1) angebrachter Erschütterungssensor ist, der einen eigenen Energiespeicher (9) aufweist.

4. Niederspannungs-Leistungsschalter nach Anspruch 1,
**dadurch gekennzeichnet,**
**dass** die Einrichtung zum Erkennen eines Einschaltvorganges ein mit dem Schaltgetriebe des Niederspannungs-Leistungsschalters (1) zusammenwirkender Piezosensor (11) ist.

5. Niederspannungs-Leistungsschalter nach Anspruch 4,
**dadurch gekennzeichnet,**
**dass** ein Kondensator (12) vorgesehen ist, der den Impuls des Piezosensors (11) zeitweise speichert.
